# EUROPEAN PATENT APPLICATION

(11) **EP 1 270 269 A1**
(43) Date of publication of application: **02.01.2003**
(21) Application number: 01830406.3
(22) Date of filing: 18.06.2001
(51) Int. Cl.: B60B 33/00

(54) **Device designed to ensure the spinning of a wheel support for trolleys in general, wheelchairs, or any other means**

(71) Applicant: Derby Ruote S.r.L., 20090 Assago (Milano) (IT)
(72) Inventor: Torti, Angelo, 20090 Assago (Milano) (IT)

(57) **Abstract**

Device designed to ensure the spinning of a wheel support for trolleys in general, wheelchairs, or other means, on which a support can be mounted, thanks to the use of no metal components. The device can be fastened using the following couplings and/or fasteners: Screw hole, expansion, plate, pin, gudgeon, and others, if any.

## Description

This invention concerns a device for the spinning of a wheel support for trolleys in general, wheelchairs, or other means, on which a support can be mounted without using balls, bearings, or other metal parts. The assembling is between a fork, an upper washer or a plate, and a lower washer, whose friction coefficient allows for the relative rotation between the upper washer or the plate that shall be connected to the structure where the support shall be mounted, and the fork to which a wheel shall be fastened.

The advantages of such invention consist in enabling the support rotation without using metal parts, thereby reducing weight, structural complexity, and production costs. Furthermore, by using lubricants or greases in a limited way, they do not run the risk of dripping or causing damage to the environment where they are used. Another advantage is that the device may be used in corrosive environments, in the presence of humidity, and in applications requiring frequent washing, right because it is assembled without any metal parts.

The couplings and/or fasteners envisaged for this type of device are as follows:

Screw hole, Expansion, Plate, Pin, Gudgeon, and others, if any.

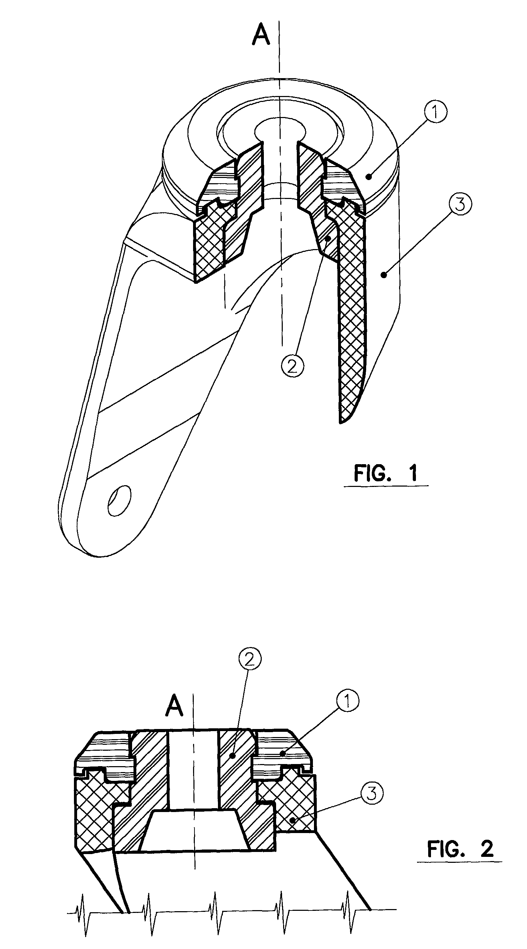

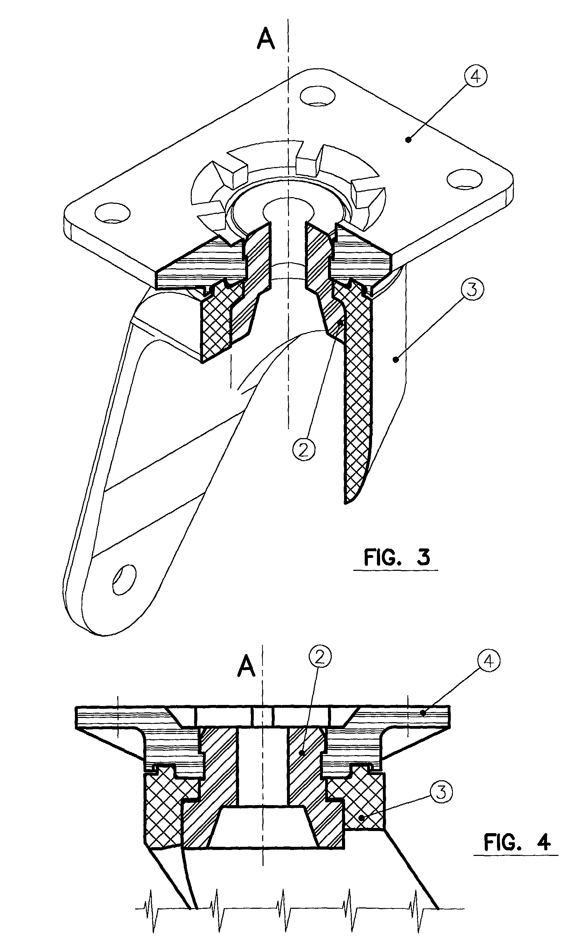

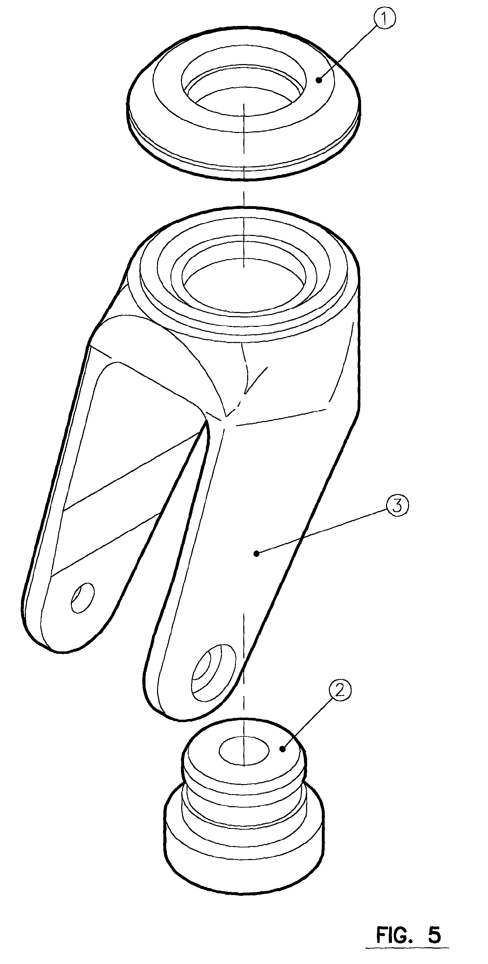

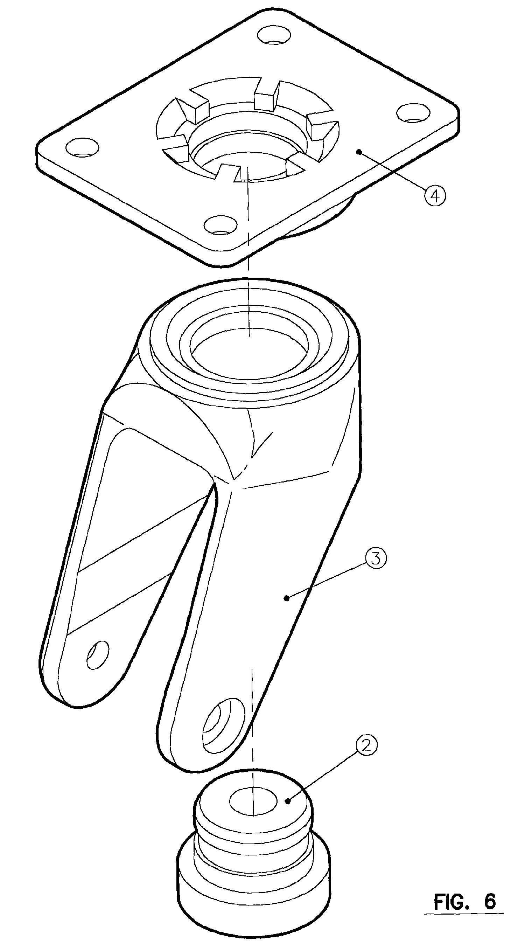

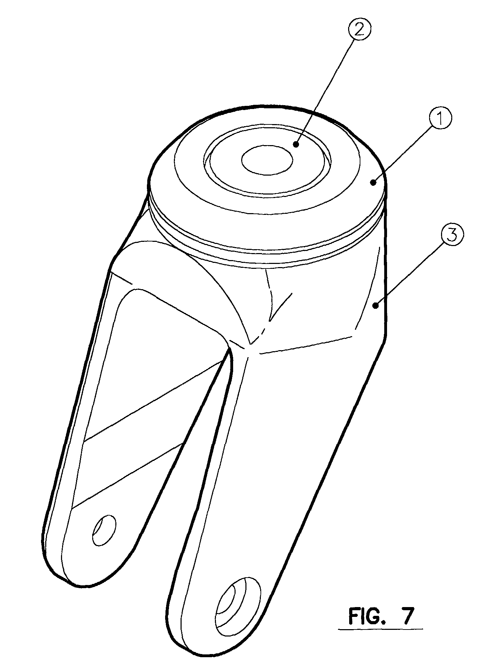

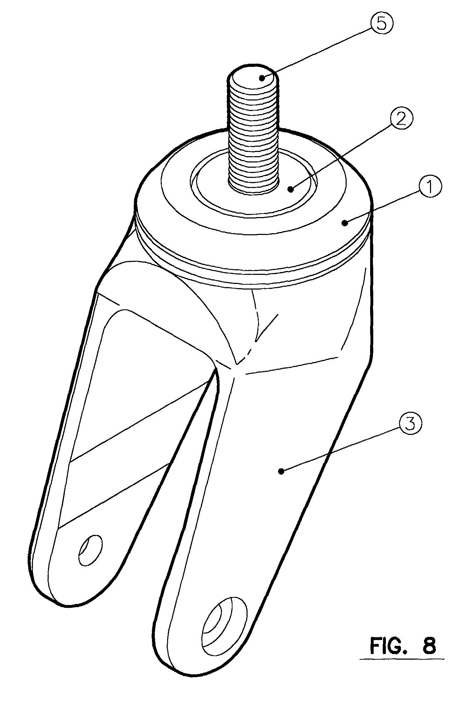

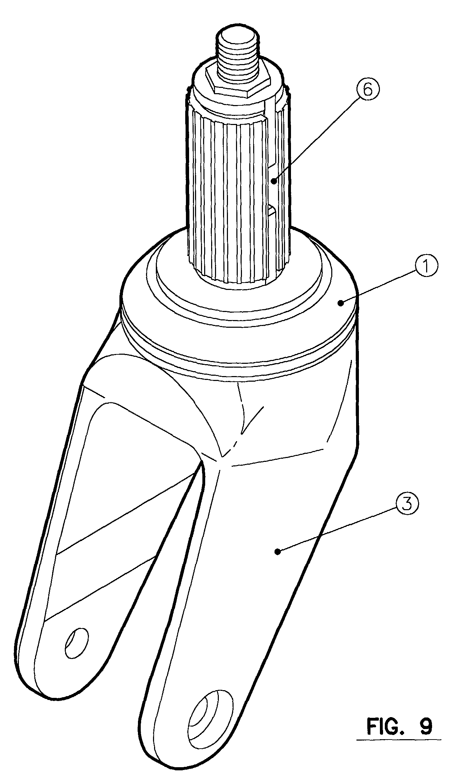

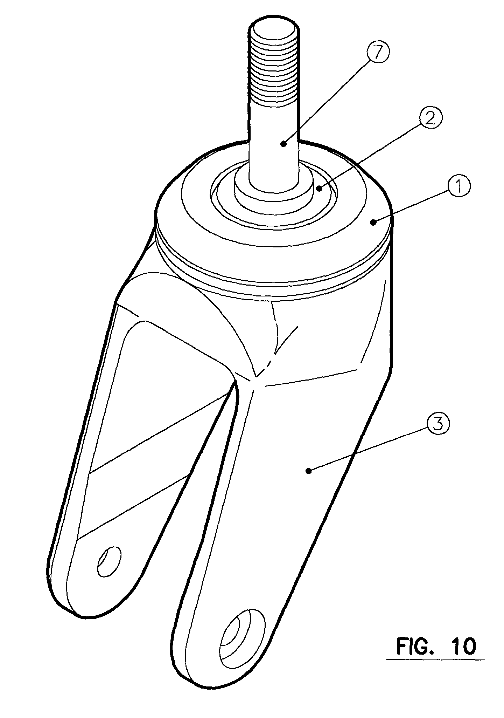

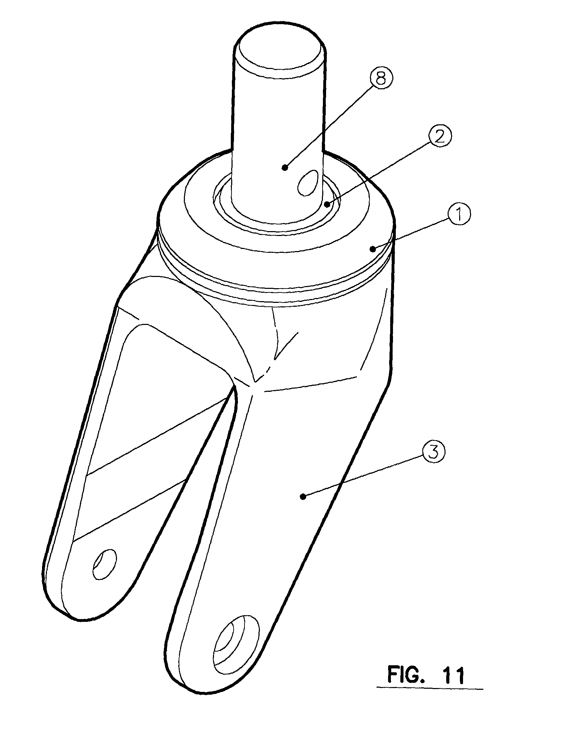

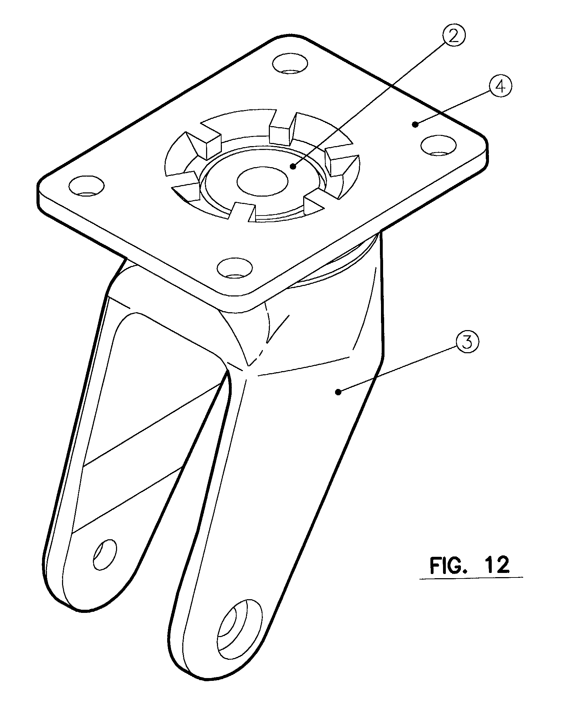

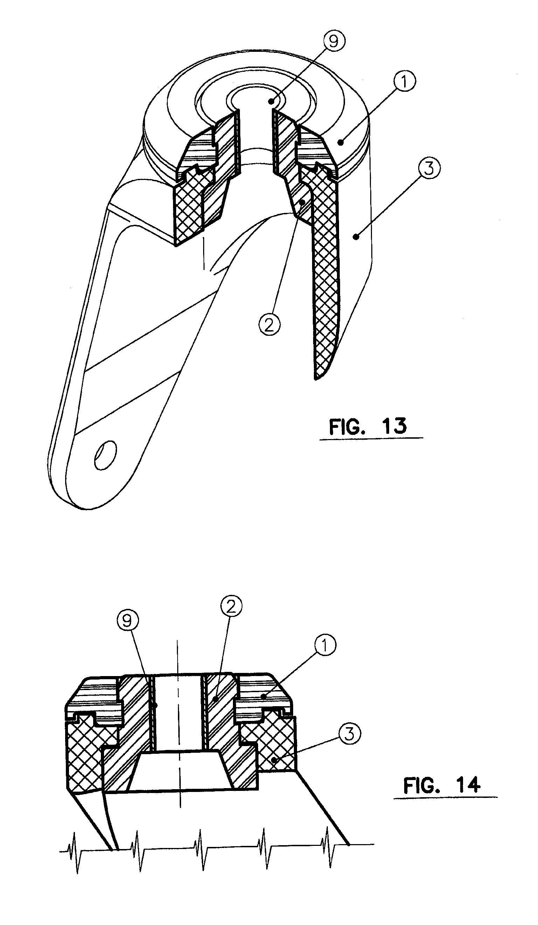

In order to better explain how such device works, a drawing (Fig. 1, Fig. 2) is herewith attached, illustrating that the upper washer (1) is integral with the lower washer (2), and rotates around the axis (A) of the fork (3). In the following drawing (Fig. 3, Fig. 4) the plate (4) is shown to be integral with the lower washer (2), and to rotate around the axis (A) of the fork (3). Moreover, different assembling systems from the ones shown in Figures 1, 2, 3, and 4 have been envisaged between the upper washer (1) or the plate (4), and the fork (3). The following drawings (Fig. 5, Fig. 6) illustrate the exploded view of the individual components making up a support (upper washer (1), lower washer (2), fork (3), and plate (4)). In Fig. 7 an overall drawing is shown of a support with a coupling for a screw hole. Furthermore, the lower washer, besides acting as an assembling piece between the fork and the upper washer, is also the reference seat to use a fastening piece, such as a screw (5) (Fig. 8), an expansion (6) (Fig. 9), a pin (7) (Fig. 10), or a gudgeon (8) (Fig. 11), between the described device and a structure to which the support has to be fastened. Figure 12 shows a support with a plate coupling (4).

## Claims

1. Device enabling the spinning of a wheel support for trolleys in general, wheelchairs, or other means on which a support can be mounted, **characterised by** the fact that the support can rotate without using balls, bearings, or any other metal parts.

2. Device enabling a support spinning as described in paragraph 1, **characterised by** the fact that a fork (3) (Fig. 1-2-3-4), and an upper washer (1) (Fig. 1-2) o a plate (4) (Fig. 3-4) are assembled together with a lower washer (2) (Fig. 1-2-3-4) and that the relative rotation between the upper washer (1) (Fig. 1-2) or the plate (4) (Fig. 3-4) that will be constrained to the structure on which the support will be mounted, and the fork (3) (Fig. 1-2-3-4) to which a wheel will be fastened, occurs thanks to the use of materials with low friction coefficients.

3. Device enabling a support spinning as described in paragraphs 1 and 2, **characterised by** the fact that the lack of rotating metal parts allows the device to be used in corrosive environments.

4. Device enabling a support spinning as described in paragraphs 1, 2, and 3, **characterised by** the fact that it can be fastened to a trolley in general, a wheelchair, or other means, through a screw (5) (Fig. 8), an expansion (6) (Fig. 9), a pin (7) (Fig. 10) a gudgeon (8) (Fig. 11), a plate (4) (Fig. 12) or any other couplings and/or fasteners.

5. Device enabling a support spinning as described in paragraphs 1, 2, 3, and 4, **characterised by** the fact that a small metal pipe (9) can be inserted to ensure a greater structural rigidity (Fig. 13, Fig. 14).

6. Device enabling a support spinning as described in paragraphs 1, 2, 3, 4, and 5, **characterised by** the fact that it can be used on turning supports without any break, with a double-action brake, a central brake, a directional brake, or any other braking devices.

7. Device enabling a support spinning as described in paragraphs 1, 2, 3, 4, 5, and 6, **characterised by** the fact that the assembling of the upper washer (1) and the lower washer (2) can also be done with a different system from the one illustrated in Figures 1, 2, 3, and 4.
